Europäisches Patentamt

(19) European Patent Office

Office européen des brevets

(11) EP 0 963 838 A1

(12) **EUROPEAN PATENT APPLICATION**
published in accordance with Art. 158(3) EPC

(43) Date of publication:
15.12.1999 Bulletin 1999/50

(21) Application number: 98904407.8

(22) Date of filing: 23.02.1998

(51) Int. Cl.$^6$: **B32B 27/32**, C08J 5/12,
B29C 65/02, B29C 65/48

(86) International application number:
PCT/JP98/00713

(87) International publication number:
WO 98/36906 (27.08.1998 Gazette 1998/34)

(84) Designated Contracting States:
DE FR GB IT NL

(30) Priority: 24.02.1997 JP 3909197

(71) Applicant:
SEKISUI CHEMICAL CO., LTD.
Osaka-shi, Osaka 530-8565 (JP)

(72) Inventors:
• NAKAMURA, Masanori
Sekisui Chemical Co., Ltd.
Minami-ku, Kyoto-shi Kyoto-fu 601-8105 (JP)

• KARUKAYA, Koichi
Sekisui Chemical Co., Ltd.
Minami-ku, Kyoto-shi Kyoto-fu 601-8105 (JP)
• NOGUCHI, Kazuhiro
Sekisui Chemical Co., Ltd.
Minami-ku, Kyoto-shi Kyoto-fu 601-8105 (JP)
• YAMAMOTO, Satoru
Sekisui Chemical Co., Ltd.
Minami-ku, Kyoto-shi Kyoto-fu 601-8105 (JP)

(74) Representative: Merkle, Gebhard
TER MEER STEINMEISTER & PARTNER GbR,
Patentanwälte,
Mauerkircherstrasse 45
81679 München (DE)

(54) **MOLDED POLYOLEFIN AND PROCESS FOR PRODUCING THE SAME**

(57) A polyolefin article is provided which exhibits excellent levels of mechanical strength and dimensional stability to temperature while not incorporating a dissimilar reinforcing material, such as a glass fiber, and which can be readily manufactured. Methods for manufacture of the polyolefin article are also provided.

The polyolefin article being composed of polyolefin and including an oriented polyolefin material to maintain its average coefficient of linear expansion at a value of not exceeding $5 \times 10^{-5}$ (/°C) in the 20 - 80 °C range, and the method for manufacture of the polyolefin article including the steps of depositing, on a surface of an oriented polyolefin material having a value of not exceeding $5 \times 10^{-5}$ (/°C) for average coefficient of linear expansion in the 20 - 80 °C, a low-molecular compound capable of dissolving the polyolefin, and thereafter effecting bonding of the oriented polyolefin material by the application of pressure and heat.

EP 0 963 838 A1

## Description

### FIELD OF THE INVENTION

The present invention relates to polyolefin articles and methods for manufacture thereof, and more particularly to polyolefin articles which are composed substantially solely of polyolefin, which have a high level of rigidity and which undergo little change in their sizes with varying temperatures, i.e., exhibit excellent dimensional stability to temperature, and to methods for manufacture thereof.

### PRIOR ART

In Japanese Patent Publication No. Hei 7-84034, a fiber-reinforced structure of polyolefin-based resin is disclosed which does not utilize dissimilar reinforcing material such as a glass fiber. The polyolefin article as disclosed therein is constituted by incorporating, as a reinforcing material, silane-crosslinked ultra-high molecular weight polyethylene fibers in a polyolefin matrix resin. Due to the absence of dissimilar reinforcing materials, this polyolefin article has imparted thereto enhanced degrees of mechanical strength and weight saving.

However, in the polyolefin article as disclosed in the above-mentioned prior art, a silane-crosslinked structure of ultra-high molecular weight polyethylene is used as a reinforcing material. This necessitates the use of a large amount of plasticizers in a manufacturing process and extremely complicates the manufacturing process. It has been accordingly difficult to manufacture the aforementioned polyolefin articles on an industrial scale.

### SUMMARY OF THE INVENTION

An object of the present invention is to provide polyolefin articles which, although not incorporating a dissimilar reinforcing material such as a glass fiber, exhibit excellent mechanical properties and dimensional stability to temperature, and which can be manufactured without difficulty, and to provide methods for manufacture thereof.

A first invention of the present application is a polyolefin article characterized as being composed of polyolefin and including an oriented polyolefin material such that its average linear expansion coefficient is maintained at a value of not exceeding $5 \times 10^{-5}$ (/°C) in the 20 - 80 °C range.

In this instance, preferably used as the aforementioned oriented polyolefin material is high-density polyethylene.

It is also preferred that a weight-average molecular weight of such high-density polyethylene is in the range of 100,000 - 500,000.

It is further preferred that the oriented polyolefin material has a sheet configuration.

A second invention of the present application is a method for manufacture of a polyolefin article, characterized as including the steps of depositing, on a surface of an oriented polyolefin material having a value of not exceeding $5 \times 10^{-5}$ (/°C) for average coefficient of linear expansion in the 20 - 80 °C range, a low-molecular compound capable of dissolving the oriented polyolefin material, and subsequent to the deposition of the low-molecular compound, bonding the oriented polyolefin material by the application of pressure and heat. In this case, the oriented polyolefin material maybe bonded to another oriented polyolefin material or to an unoriented polyolefin material for integration thereof to obtain the polyolefin article.

In the method for manufacture of a polyolefin article according to the second invention, a polymerizable monomer is preferably used as the aforementioned low-molecular compound.

Also in the method according to the second invention for manufacture of a polyolefin article, the oriented polyolefin material is preferably provided in a sheet form. Following the deposition of low-molecular compound on the oriented polyolefin sheet, the oriented polyolefin sheet is bonded to an oriented or unoriented polyolefin sheet by the application of pressure and heat.

Also in the method according to the second invention for manufacture of a polyolefin article, the preferred oriented polyolefin material is an oriented polyolefin sheet which indicates a minus value for average coefficient of linear expansion in the 20 - 80 °C range. This oriented polyolefin sheet is placed on an oriented or unoriented polyolefin sheet which has a plus value for average coefficient of linear expansion in the 20 - 80 °C range for subsequent bonding thereof by application of pressure and heat.

A third invention of the present invention is a method for manufacture of a polyolefin article, characterized as including the steps of covering an oriented polyolefin material having a value of not exceeding $5 \times 10^{-5}$ (/°C) for average coefficient of linear expansion in the 20 - 80 °C range with a layer of polyolefin having a melting point lower than that of the oriented polyolefin material, and subsequent to the covering with the polyolefin layer, joining the oriented polyolefin material by the application of pressure and heat at a temperature below the melting point of the oriented polyolefin material but sufficient to soften or melt the covering polyolefin. In this case, the oriented polyolefin material may be joined to another oriented polyolefin material or to an unoriented polyolefin material, for integration thereof to obtain the polyolefin article.

In the present specification, a melting point of polyolefin refers to a peak temperature during melt, as measured by a DSC (differential scanning calorimeter) with a heating rate of 10 °C/min. A melting point of oriented polyolefin refers to a peak melt temperature measured while its sample is wound around a copper piece, i.e., while the sample is maintained under a prescribed tension.

In the method according to the third invention for manufacture of a polyolefin article, it is preferred that the oriented polyolefin material is comprised of plural oriented polyolefin sheets indicating minus values for average linear expansion coefficient in the 20 - 80 °C range, an oriented or unoriented polyolefin sheet having a plus value for average linear expansion coefficient in the 20 - 80 °C range is interposed between the oriented polyolefin sheets each covered with a layer of polyolefin, and the polyolefin sheets are joined to each other by the application of pressure and heat.

In the methods according to the second and third inventions for manufacture of a polyolefin article, the oriented polyolefin material may preferably be prepared by subjecting an oriented polyolefin material having a value of not exceeding $5 \times 10^{-5}$ (/°C) for average coefficient of linear expansion in the 20 - 80 °C range to a heat treatment so that its surface layer once melts.

A method for manufacture of a polyolefin article, according to a fourth invention of the present application, is characterized as including the steps of subjecting an oriented polyolefin material having a value of not exceeding $5 \times 10^{-5}$ (/°C) for average coefficient of linear expansion in the 20 - 80 °C range to a heat treatment so that its surface layer melts, and joining the oriented polyolefin material by the application of pressure and heat at a temperature below a melting point of the heat-treated oriented polyolefin material but sufficient to melt the surface thereof. In this case, the oriented polyolefin material may be joined to another oriented polyolefin material or to an unoriented polyolefin material, for integration thereof to obtain the polyolefin article.

A detailed explanation of the present invention is given below.

## (Polyolefin article according to the first invention)

The polyolefin article according to the first invention includes at least an oriented polyolefin material so as to have a value of not exceeding $5 \times 10^{-5}$ (/°C) for average coefficient of linear expansion in the 20 - 80 °C range. The coefficient of linear expansion, as used herein, is a measure to indicate an increment of size of a substance for a rise in temperature. The coefficient of linear expansion is generally determined by a method which utilizes TMA (mechanical analysis) to successively and precisely measure a size of a substance while raised in temperature. In this specification, however, the evaluation of linear expansion coefficient was achieved in a simplified fashion, i.e., by calculating an average coefficient of linear expansion in the 20 - 80 °C range from a difference between sizes at 20 °C and 80 °C, as illustrated in the below-described Examples.

An average linear expansion coefficient of polyolefin in an unoriented state is generally greater than $5 \times 10^{-5}$ (/°C) in the 20 - 80 °C range. Due to the inclusion of the oriented polyolefin material, the polyolefin article of the present invention exhibits a value of not exceeding $5 \times 10^{-5}$ (/°C) for average coefficient of linear expansion in the 20 - 80 °C range, as specified above. In other words, the oriented polyolefin material is included in the polyolefin article so that its average coefficient of linear expansion in the 20 - 80 °C range is maintained at a value of not exceeding $5 \times 10^{-5}$ (/°C). If the average coefficient of linear expansion exceeds $5 \times 10^{-5}$ (/°C), the polyolefin article exhibits reduced levels of dimensional stability to temperature and mechanical properties. Its average coefficient of linear expansion in the 20 - 80 °C range is maintained preferably at a value equal or close to 0, more specifically within the approximate range of $-2 \times 10^{-5} - 2 \times 10^{-5}$ (/°C), which range is effective to further enhance the dimensional stability to temperature.

The manner to incorporate at least the oriented polyolefin material in the polyolefin article so as to control its average coefficient of linear expansion at a value of not exceeding $5 \times 10^{-5}$ (/°C) in the 20-80 °C range is not particularly limited. Preferably, the oriented polyolefin material is incorporated in the sheet form.

The polyolefin article of the present invention is composed entirely of polyolefin and includes at least the oriented polyolefin material, as described above. Accordingly, the polyolefin article may be comprised entirely of the oriented polyolefin material. It may alternatively be comprised of a combination of the oriented and unoriented polyolefin materials.

In an exemplary case where the oriented polyolefin material is used in the form of an oriented polyolefin sheet, the oriented polyolefin sheet may be placed on an unoriented polyolefin sheet for subsequent bonding thereof by the application of pressure and heat with the assistance of intervening adhesive material, such as low-molecular compounds and polymerizable monomers which will be described below. Alternatively, a plurality of oriented polyolefin sheets may be superimposed such that the adhesive material is interposed between the sheets for subsequent integration thereof by the application of pressure and heat to constitute the polyolefin article.

Also, the type of the polyolefin resin which can be used is not particularly limited. Useful polyolefin resins include low-density polyethylene, straight-chain low-density polyethylene, high-density polyethylene, homopolypropylene and blocked polypropylene, for example. When an elastic modulus of each resin after being oriented is taken into consideration, the preferred polyolefin resin used to constitute the oriented polyolefin material is polyethylene for its high theoretical modulus of elasticity. The use of highly crystalline, high-density polyethylene is more preferred.

A molecular weight of the aforementioned polyolefin is not particularly specified, but its weigh-average molecular weight may preferably be not higher than 500,000. When attempted to obtain the oriented polyolefin material, the use of polyolefin having a weight-average molecular weight of higher than 500,000 may result not only in the difficulty to form a primary oriented sheet, but also in the failure to achieve orientation at high ratios for its reduced degree of stretchability. A lower limit of weight-average molecular weight of polyolefin is not particularly specified. However, if its weight-average molecular weight falls below 100,000, the resin itself may become brittle to possibly impair its stretchability.

It is accordingly preferred to use polyolefin having a weight-average molecular weight in the range of 100,000 - 500,000. More preferably, high-density polyethylene is used having a weight-average molecular weight in the same range.

Determination of the aforementioned weight-average molecular weight is typically made by a method wherein samples are dissolved in a hot solvent such as hot o-dichlorobenzene and then passed through columns to measure elution time, i.e., by a so-called gel permeation chromatography (high-temperature GPC). The values given in the present specification for weight-average molecular weight are those determined by this method.

The above-specified range of weight-average molecular weight is preferably between about 0.1 and 20, in terms of melt flow rates (hereinafter referred to as MI). If the MI falls outside this range, the orientation at high ratios may become difficult. The melt flow rate, as used herein, gives an indication of a melt viscosity of a thermoplastic resin, as specified in JIS K 6760.

**(Method according to the second invention for manufacture of a polyolefin article)**

The second invention encompasses depositing, on a surface of an oriented polyolefin material having a value of not exceeding $5 \times 10^{-5}$ (/°C) for average coefficient of linear expansion in the 20 - 80 °C range, a low-molecular compound capable of dissolving the polyolefin, and thereafter bonding the oriented polyolefin material to another oriented polyolefin material or to an unoriented polyolefin material by the application of pressure and heat.

In this instance, the oriented polyolefin material is provided in the preferred form of oriented polyolefin sheet. As also described earlier in the explanation of the first invention, the type of polyolefin resin for use in the oriented polyolefin material is not particularly limited, and may be low-density polyethylene, straight-chain low-density polyethylene, high-density polyethylene, homopolypropylene, blocked polypropylene or the like. When an elastic modulus of each resin after oriented is taken into consideration, polyethylene is preferred for its high theoretical modulus of elasticity. The use of highly crystalline, high-density polyethylene is more preferred.

In obtaining the oriented polyolefin sheet, various additives, other than polyolefin, can be added when needed, which include a crosslinking aid, a free-radical photoinitiator and the like. Illustrative of crosslinking aids are polyfunctional monomers such as triallyl cyanurate, trimethylolpropane triacrylate and diallyl phthalate. Examples of radical photoinitiators include benzophenone, thioxanthone, acetophenone and the like. The amount of such crosslinking aid and radical photoinitiator to be added is not particularly specified, but may generally be preferred to fall within the range of 1.0 - 2.0 parts by weight, based on 100 parts by weight of polyolefin making up the oriented polyolefin sheet, in which range crosslinking is allowed to proceed rapidly.

A polyolefin sheet before oriented can be obtained by a variety of methods. One applicable method involves kneading the above-listed polyolefin in a kneader and extruding the kneaded polyolefin from a sheet-extrusion die into a sheet which is subsequently cooled. A thickness of the polyolefin sheet is preferably maintained within the range of 0.5 - 4 mm. If it is below 0.5 mm, the polyolefin sheet may be excessively thinned as it is oriented, leading to the reduction in strength thereof to a level insufficient to withstand handling. If it exceeds 4 mm, orienting thereof may become difficult.

The polyolefin sheet thus obtained is then oriented. The orientation ratio, while varied depending upon the particular type of polyolefin used, is preferably chosen so that the polyolefin sheet after oriented exhibits a minus value for average coefficient of linear expansion in the 20 - 80 °C range. More preferably, this orientation ratio is set within the range of 20 - 40. The use of orientation ratio of below 20 may result in the difficulty to maintain the average coefficient of linear expansion in the 20 - 80 °C range at minus values, regardless of the type of polyolefin used. The effectiveness of enhancing mechanical strength may also be reduced. If the orientation ratio exceeds 40, control of an orienting operation may become difficult.

An orientation temperature used to obtain the oriented polyolefin sheet is not particularly specified, but may preferably be maintained within the range of 85 °C - 120 °C. The use of orientation temperature of exceeding 120 °C may result not only in the increased occurrence of sheet breakage, but also in the difficulty to effect orientation at high ratios. The use of orientation temperature of below 85 °C may result not only in the increased occurrence of whitening

4

in the oriented sheet, but also in the difficulty to effect orientation at high ratios.

Any technique can be employed to orient the polyolefin sheet. A conventional uniaxial drawing, particularly roll drawing, is suitably employed. The roll drawing is a technique which passes a primary sheet through two pairs of rolls, rotated at different speeds, and draws the sheet while applying heat thereto so that its molecules can be oriented predominantly in uniaxial direction. In this instance, the ratio in speed between the two pairs of rolls gives the orientation ratio.

If the primary sheet is relatively thick, the sole use of roll drawing technique may become insufficient to effect smooth orientation thereof. In such an instance, the sheet may be calendered, prior to being roll drawn. Calendering is achieved by introducing between a pair of counterrotating calender rolls a primary sheet having a thickness greater in dimension than a clearance between the calender rolls so that the sheet is reduced in thickness while extended in its longitudinal direction. Once preoriented by calendering, the sheet can be uniaxially oriented smoothly by the subsequent roll drawing.

In the above orientation process, the above-specified orientation temperature can be attained by controlling a temperature at which the sheet is preheated, roll temperature and/or a surrounding temperature.

In the second invention, the oriented polyolefin material having a value of not exceeding $5 \times 10^{-5}$ (/°C) for average coefficient of linear expansion in the 20 - 80 °C range, preferably in the form of oriented polyolefin sheet, is utilized which can be obtained in the manner as described above. The low-molecular compound capable of dissolving the polyolefin is deposited on a surface of the oriented polyolefin material which is subsequently bonded by the application of pressure and heat.

Polyolefin, while generally considered to be insoluble to low-molecular compounds, shows an increased solubility to the low-molecular compounds when raised to a temperature equal to or higher than its crystal transition temperature. For example, polyethylene shows a marked increase in solubility to the low-molecular compounds when it is raised to a temperature of about 60 °C or higher. The second invention utilizes this nature of polyolefin. The improvement in adhesion of the oriented polyolefin material is achieved by depositing the aforementioned low-molecular compound on a surface of the oriented polyolefin material to thereby dissolve the surface.

The preferred low-molecular compound has a high degree of affinity for polyolefin, i.e., has a solubility parameter close in value (SP value) to that of polyolefin. For example, the low-molecular compounds such as octane, nonane, decane and the like, which have molecular structures similar to that of polyolefin, may preferably used. The use of benzene, toluene, xylene or the like, which have no polar group, is also preferred.

It is also preferred to use a polymerizable monomer capable of dissolving polyolefin for the aforementioned low-molecular compound.

The type of the aforementioned polymerizable monomer is not particularly limited, so long as it is capable of dissolving polyolefin. The useful polymerizable monomer generally contains an unsaturated double bond in a molecule, and may be a polyfunctional compound containing two or more unsaturated double bonds per molecule. However, the use of monomers having a low affinity for polyolefin, i.e., having SP (solubility parameter) values far apart from that of the particular polyolefin used, is not preferred because it results in the reduced solubility of the polyolefin when heated.

Those monomers which have a sterically hindered nature and are difficult to undergo homopolymerization, as represented by vinylsilanes such as vinyltrimethoxysilane, vinyltriethoxysilane and the like, or which have a highly-polar functional group and are difficult to undergo homopolymerization, as represented by maleic anhydride, must be rendered more polymerizable, as by the addition of another component to form copolymers therewith.

Examples of specific polymerizable monomers include styrene; divinylbenzene; diallyl phthalate; and methacrylic or acrylic monomers such as trimethylolpropane trimethacrylate, tripropylene glycol diacrylate and glycidyl methacrylate. Styrene monomer is particularly suitable for use as the polymerizable monomer because of its high affinity for polyethylene.

Peroxide may preferably be further added to the polymerizable monomer to improve polymerizability. Suitable peroxides include dicumyl peroxide, di-tert-butyl peroxide, tert-butyl peroxypivalate, tert-butyl peroxyisobutylate and the like.

Where the aforementioned peroxide is added, a proportion in which the peroxide and polymerizable monomer are blended is not particularly specified. However, the peroxide may generally be used within the range of 0.01 - 1 parts by weight, based on 100 parts by weight of the polymerizable monomer. If the amount of peroxide falls below 0.01 parts by weight, the addition thereof may result in the failure to obtain a purposed polymerizability improvement. If it exceeds 1 part by weight, the effectiveness of peroxide to improve polymerizability may not be furthered.

There are various methods by which the aforementioned low-molecular compound is deposited on a surface of the oriented polyolefin material. For exemplary purposes, the low-molecular compound may be deposited on the surface of oriented polyolefin material by using a suitable applicator such as a roll coater. In such an instance, the amount of low-molecular compound to be applied onto the surface of oriented polyolefin material is preferably maintained within the range of 0.01 - 2.0 parts by weight, based on 100 parts by weight of the oriented polyolefin material. If it falls below 0.01 parts by weight, the provision of a sufficient adhesion may become difficult. On the other hand, if it goes beyond 2.0 parts by weight, the effectiveness of providing adhesion may be hindered.

In a case where the polymerizable monomer is utilized for the aforementioned low-molecular compound, a technique which coats a solution of the polymerizable monomer onto the surface of oriented polyolefin material may be suitably employed for its simplicity. In this instance, the amount of the polymerizable monomer (excluding a solvent) to be coated is preferably within the range of 0.01 - 2.0 parts by weight, based on 100 parts by weight of the oriented polyolefin sheet. If it falls below 0.01 parts by weight, the provision of a sufficient adhesion may become difficult. On the other hand, if it goes beyond 2.0 parts by weight, the effectiveness of providing adhesion may be hindered.

The technique used to coat the low-molecular compound is not particularly limited. For example, the low-molecular compound can be uniformly coated on the surface of oriented polyolefin sheet by using a technique wherein the oriented polyolefin sheet, either prior to or after being superposed, is dipped in any of the low-molecular compound, a solution of the low-molecular compound and the aforementioned mixture of polymerizable monomer and peroxide, and is subsequently squeezed between a pair of rolls.

In order to improve heat resistance of the oriented polyolefin sheet, particularly its ability to withstand the adhesion through the low-molecular compound under heating conditions, or to improve the resistance of a resulting polyolefin article to heat and creep, the oriented polyolefin sheet may preferably be subjected to a crosslinking treatment. Crosslinking can be achieved by irradiation with electron or ultraviolet rays.

The dosage of electron beam irradiation may be varied depending upon the composition and thickness of the oriented polyolefin sheet used. Suitable dosages are generally in the range of 1 - 20 Mrads, preferably in the range of 3 - 10 Mrads. Where crosslinking is carried out by the electron beam irradiation, the crosslinking may be allowed to proceed smoothly if a crosslinking aid is incorporated in the oriented polyolefin sheet.

The dosage of ultraviolet irradiation is generally in the range of 50 - 800 mW/cm$^2$, preferably in the range of 100 -500 mW/cm$^2$. Where crosslinking is achieved by the ultraviolet irradiation, incorporation of a photoinitiator or crosslinking aid in the oriented polyolefin sheet serves to facilitate the ultraviolet crosslinking.

A preferred level of crosslinking is in the approximate range of 50 - 90 %, in terms of gel fraction as measured by the below-described method.

In the second invention, as previously described, the polyolefin-dissolving low-molecular compound is deposited on the surface of the oriented polyolefin material which is subsequently bonded by the application of pressure and heat. The bonding may be achieved between the oriented polyolefin materials, e.g., between plural oriented polyolefin sheets each having the polyolefin-dissolving low-molecular compound deposited thereon. Alternatively, the oriented polyolefin sheet having the polyolefin-dissolving low-molecular compound deposited thereon may be bonded to an unoriented polyolefin material, e.g., an unoriented polyolefin sheet.

The heat and pressure applied to effect the bonding are not particularly specified as they are varied depending upon the particular types of the oriented polyolefin material and polymerizable monomer used. In general, the pressure is preferably in the range of 0.1 - 5 kg/cm$^2$ and the preferred temperature is equal to or lower than the melting point of the particular polyolefin used. If the pressure goes outside the above-specified range, the process may result in the reduced consistency in configuration of the resulting laminate. If the heat temperature at which the bonding is effected exceeds the melting point of polyolefin, the process may cause, for example, shrinkage during fabrication to possibly result in the reduced consistency in configuration of the resulting laminate. Its coefficient of linear expansion may also be adversely affected.

The procedure used to specifically effect bonding by the application of pressure and heat is not particularly limited. For example, a stack of the oriented polyolefin sheets, with a layer of the aforementioned polymerizable monomer being interposed between the sheets, may be placed between a pair of heating press plates which subsequently applies the above-specified pressure to effect bonding of the oriented polyolefin sheets for integration thereof.

Thereafter, the laminate is generally cooled by a cool press or the like. If circumstances permit, the laminate may be allowed to cool naturally. Neither the period during which the above-specified heat and pressure are applied nor the cooling period is particularly specified. In general, either can be accomplished within the approximate range of 2 - 10 minutes.

The following describes a preferred embodiment for practice of the method according to the second invention for manufacture of a polyolefin article. In this preferred embodiment, an oriented polyolefin sheet indicating a minus value for average coefficient of linear expansion in the 20 - 80 °C range and an oriented or unoriented polyolefin sheet indicating a plus value for average coefficient of linear expansion in the 20 - 80 °C are stacked in such a manner as to interpose the aforementioned low-molecular compound therebetween. The stack is then integrated by the application of pressure and heat to obtain a polyolefin article.

In this preferred embodiment, the oriented polyolefin sheet indicating a minus value for average coefficient of linear expansion in the 20 - 80 °C range, as well as the oriented or unoriented polyolefin sheet indicating a plus value for average coefficient of linear expansion in the 20 - 80 °C, are first provided.

The former, i.e., the oriented polyolefin sheet having a minus value for average coefficient of linear expansion in the 20 - 80 °C range can be prepared in the same manner as in the preparation of the aforementioned oriented polyolefin sheet. Accordingly, a description of such a process is omitted here by referring to the preceding related description.

The above-described procedure for preparation of the oriented polyolefin sheet having a minus value for average coefficient of linear expansion in the 20 - 80 °C range can be followed, except that the orientation ratio is varied, to prepare the oriented or unoriented polyolefin sheet having a plus value for average coefficient of linear expansion in the 20 - 80 °C range.

A polyolefin sheet, prior to being oriented, generally exhibits a value of about $10 \times 10^{-5}$ for average coefficient of linear expansion in the 20 - 80 °C. As the polyolefin sheet is oriented at increasing ratios, its average coefficient of linear expansion decreases. Accordingly, a polyolefin sheet, either unoriented or oriented at lower orientation ratios, can be utilized for the aforementioned polyolefin sheet having a plus value for average coefficient of linear expansion in the 20 - 80 °C.

In such an instance, the range of the lower orientation ratios may be varied depending upon the polyolefin used, but may generally be below 20. Orienting the polyolefin sheet at a ratio of 20 or higher may result in the difficulty to maintain its average coefficient of linear expansion at plus values.

The preceding descriptions as to the material used to constitute the oriented polyolefin sheet having a minus value for average coefficient of linear expansion, as well as the treatments given thereto such as a crosslinking treatment, also apply to the above-described polyolefin sheet, either oriented or unoriented, which has a plus value for average coefficient of linear expansion. Accordingly, the details thereof are omitted here by referring to the preceding descriptions.

Next, the aforementioned oriented polyolefin sheet and oriented or unoriented polyolefin sheet, arranged in a fashion to interpose the polyolefin-dissolving low-molecular compound therebetween, are bonded together by the application of pressure and heat. This low-molecular compound can be selected from those described earlier. The bonding by the application of pressure and heat can be effected in the manner as described earlier.

Also in the preferred embodiment, the oriented polyolefin sheet and the oriented or unoriented polyolefin sheet, after being bonded for lamination, are generally cooled. The cooling can be accomplished by using the technique as described earlier.

In the preferred embodiment, an average coefficient of linear expansion of a resulting polyolefin article in the 20 - 80 °C range can be readily controlled at values of not exceeding $5 \times 10^{-5}$ (/°C) by adjusting the stacking numbers of the oriented polyolefin sheets having minus values for average coefficient of linear expansion in the 20 - 80 °C range and of the oriented or unoriented polyolefin sheets having plus values for average coefficient of linear expansion in the 20 - 80 °C range, as well as by controlling a thickness of the stack.

For exemplary purposes, an average coefficient of linear expansion of a resulting polyolefin article in the 20 - 80 °C can be controlled at values of not exceeding $5 \times 10^{-5}$ (/°C) by preparing the stack consisting of oriented polyolefin sheets having a value of about minus 1 for average coefficient of linear expansion in the 20 - 80 °C alternating with unoriented polyolefin sheets having a value of about plus 10 for average coefficient of linear expansion in the 20 - 80 °C so that a ratio in total thickness of the former to the latter polyolefin sheets is generally brought to the range within 1 to 5, preferably within 1 to 4.

**(Method according to the third invention for manufacture of a polyolefin article)**

In the method according to the third invention for manufacture of a polyolefin article, an oriented polyolefin material having a value of not exceeding $5 \times 10^{-5}$ (/°C) for average coefficient of linear exPansion in the 20 - 80 °C range is covered with a layer of polyolefin having a melting point lower than that of the oriented material. Pressure and heat are subsequently applied to the oriented polyolefin material at a temperature of below the melting point thereof to soften or melt the covering polyolefin layer, so that the oriented polyolefin material covered with the polyolefin is joined.

The oriented polyolefin material having a value of not exceeding $5 \times 10^{-5}$ (/°C) for average coefficient of linear expansion in the 20 - 80 °C can be chosen from those used in the second invention. Also in such a case, the use of an oriented polyolefin sheet is preferred. The oriented polyolefin sheet can be prepared by following the procedure as previously described in the explanation of the second invention.

The aforementioned oriented polyolefin material is then covered at its surface with the polyolefin having a melting point lower than that of the oriented polyolefin material. The covering can be accomplished by various techniques, as by melting the polyolefin which constitutes the covering layer and coating the polyolefin melt on the oriented polyolefin material by a suitable means. In an exemplary case where the oriented polyolefin material is composed of high-density polyethylene, useful polyolefins having melting points lower than the melting point of the oriented polyolefin material include straignt-chain low-density polyethylene, low-density polyethylene, ethylene-vinyl acetate copolymer, and other polyolefinic thermoelastic elastomers, for example.

Also, in the method according to the third invention for manufacture of a polyolefin article, the above-mentioned oriented polyolefin material covered with the lower-melting point polyolefin can be utilized. Joining thereof is achieved by applying thereto pressure and heat at a temperature below the melting point of the oriented polyolefin material. The specific technique used in the second invention to apply pressure and heat, as well as the joining process, can be utilized analogously in this instance.

Also in the third invention, a plurality of oriented polyolefin materials each covered with the lower-melting point polyolefin may be bonded to each other by the application of pressure and heat to provide a polyolefin article. Alternatively, the oriented polyolefin material covered with the lower-melting point polyolefin may be bonded to a different polyolefin material, either oriented or unoriented, by the application of pressure and heat to provide a polyolefin article.

Again, in the third invention, an oriented polyolefin sheet is used as the preferred form of the oriented polyolefin material. In such a case, an oriented polyolefin sheet covered with polyolefin having a molting point lower than that of the oriented polyolefin sheet may be provided for subsequent bonding thereof to an oriented or unoriented polyolefin sheet or to another oriented polyolefin sheet covered with polyolefin by the application of the pressure and heat at a temperature below the melting temperature of the oriented polyolefin sheet.

The third invention may preferably follow the second invention. Specifically, an oriented polyolefin sheet which exhibits a minus value for average coefficient of linear expansion in the 20 - 80 °C is covered with polyolefin having a molting point lower than that of the oriented polyolefin sheet. A plurality of such polyolefin-covered oriented polyolefin sheets is then arranged such that an oriented or unoriented polyolefin sheet having a plus value for average coefficient of linear expansion in the 20 - 80 °C is interposed between the polyolefin-covered oriented polyolefin sheets, followed by the application of pressure and heat at a temperature below the melting temperature of the oriented polyolefin sheet to obtain a polyolefin article. A process used to provide the aforementioned oriented polyolefin sheet which exhibits a minus value for average coefficient of linear expansion in the 20 - 80 °C, as well as a process used to provide the aforementioned oriented or unoriented polyolefin sheet having a plus value for average coefficient of linear expansion in the 20 - 80 °C, are similar to those described in the preferred embodiment of the second invention. Accordingly, the descriptions of those processes are omitted here by referring to the preceding related descriptions.

## (Method according to the fourth invention for manufacture of a polyolefin article)

In the method according to the fourth invention for manufacture of a polyolefin article, an oriented polyolefin material having a value of not exceeding $5 \times 10^{-5}$ (/°C) for average coefficient of linear expansion in the 20 - 80 °C is heat treated so that its surface layer once melts, and is thereafter joined by the application of pressure and heat at a temperature below a melting point of the oriented polyolefin material but sufficient to melt the surface layer thereof.

In this case, the aforementioned oriented polyolefin material having a value of not exceeding $5 \times 10^{-5}$ (/°C) for average coefficient of linear expansion in the 20 - 80 °C is similar to the oriented polyolefin material provided in the second invention. Accordingly, its explanation is omitted by referring to the descriptions given in the explanation of the second invention.

In the fourth invention, the above-specified oriented polyolefin material is subjected to a heat treatment to once melt its surface layer. This heat treatment is carried out such that only the surface layer melts while its central portion is left unmelted. The heat treatment of the oriented material results in the relaxation of its molecular orientation at the surface layer. On the other hand, its molecules at the central portion is kept oriented in one direction. Accordingly, the surface layer melts at a lower temperature than does the central portion. This follows that if the heating temperature to effect bonding is set at a temperature below a melting point of the central portion, more specifically at a temperature level sufficient to melt the surface layer but insufficient to melt the central portion, the oriented polyolefin material melts only at its surface layer to result in the easy and firm bonding thereof.

The initial heat treatment to melt the surface layer can be achieved according to the following procedure. An oriented polyolefin material is coated at its surface with the aforementioned low-molecular compound capable of dissolving the polyolefin and is subsequently heat dried such that the oriented polyolefin material melts only at its surface layer located in contact with the low-molecular compound. The use of the low-molecular compound may be avoided if the oriented polyolefin material can be surface heated to melt only the surface layer.

A technique to carry out the aforementioned heat treatment is not particularly specified, so long as it can heat the surface of oriented polyolefin material to a temperature equal to or higher than its melting point within a short period of time. For example, a technique may be utilized wherein the oriented polyolefin material is pressed against a heat roll maintained at a temperature equal to or higher than its melting point.

The joining of the oriented polyolefin material may be achieved in the same manner as employed in the second or third invention. It is however desired that a temperature at which the oriented polyolefin material is joined should be precisely controlled at a level below its melting point but sufficient to melt its surface. In an exemplary case where the oriented polyolefin material is composed of high-density polyethylene, the joining temperature may desirably be controlled within the range of 135 - 140 °C which range is close to but lower than its melting point.

Once subjected to the aforementioned heat treatment, the oriented polyolefin material undergoes relaxation of its molecular orientation at its surface layer. Accordingly, the oriented polyolefin material such treated, if heated again to a temperature below its melting point, melts only at the surface to enable the easy and firm joining thereof. A melting point (DSC-measured peak temperature during its fusion; the measurement carried out at a heating rate of 10 °C/min) of high-density polyethylene lies within the range of 133 - 140 °C in its unoriented form (its original state). However, when oriented to take a crystalline form, its melting point (DSC-measured peak temperature during its fusion; the measurement carried out under a constant tension at a heating rate of 10 °C/min) increases to fall within the range of 140 - 150 °C. The notice of this phenomenon has led to the conception of the fourth invention. For example, when an oriented polyethylene sheet is heat treated to relax a crystalline orientation of its surface, a melting point of polyolefin located in the vicinity of the surface of the oriented polyethylene sheet can be reduced to fall within the range of 133 - 140 °C. When heated to a temperature of within 135 - 140 °C, such an oriented polyethylene sheet can be joined for integration while maintaining a crystalline orientation of a sheet interior portion. As analogous to the second or third invention, the oriented polyolefin material may be joined to another oriented polyolefin material for integration thereof to obtain a polyolefin article. Alternatively, the oriented polyolefin material, after being heat treated, may be joined to an unoriented polyolefin material or to a different oriented polyolefin material to obtain a polyolefin article.

The heat treatment used in the fourth invention may suitably be applied to the second or third invention. That is, the heat treatment may be carried out either prior to or after such a treatment as the deposition of low-molecular compound capable of dissolving the oriented polyolefin material in the second invention or the covering of the oriented polyolefin material with polyolefin having a melting point lower than that of the oriented polyolefin material in the third invention. This allows the oriented polyolefin material to melt only at its surface layer whose molecular orientation is accordingly relaxed. Therefore, the oriented polyolefin material such treated, when again heated to a temperature below its melting point but sufficient to melt the surface layer, can be joined to provide a polyolefin article having a further enhanced mechanical strength.

## FUNCTIONS

The polyolefin article according to the first invention has imparted thereto the improved dimensional stability to temperature and enhanced mechanical properties, because it includes an oriented polyolefin material so that its average coefficient of linear expansion in the 20 - 80 °C range is maintained at a value of not exceeding $5 \times 10^{-5}$ (/°C).

High-density polyethylene, when oriented, exhibits a sufficient level of elastic modulus and an excellent level of crystallinity. Accordingly, the use of high-density polyethylene for the aforementioned oriented polyolefin material results in the manufacture of a polyolefin article having a further enhanced mechanical strength.

In particular, high-density polyethylene having a weight-average molecular weight in the range of 100,000 - 500, 000 can be oriented without difficulty to provide a high-density polyethylene material oriented at high ratios. Accordingly, its use for the aforementioned oriented polyolefin material results in readily obtaining the polyolefin article having an enhanced mechanical strength.

The aforementioned oriented polyolefin material for use in the polyolefin article of the present invention may be utilized in a sheet form. In such a case, a polyolefin sheet can be readily prepared according to a conventional sheet-forming procedure and can be readily oriented according to a customarily-employed orienting procedure to provide an oriented polyolefin sheet. Also, the polyolefin article in accordance with the present invention can be readily obtained with the use of sheet-form oriented polyolefin material, as by superposing and joining plural oriented polyolefin sheets.

In the method according to the second invention for manufacture of a polyolefin article, the polyolefin-dissolving low-molecular compound is deposited on a surface of the oriented polyolefin material having a value of not exceeding $5 \times 10^{-5}$ (/°C) for average coefficient of linear expansion in the 20 - 80 °C range, which is subsequently bonded by application of pressure and heat. The oriented polyolefin material can be firmly bonded because its surface is dissolved by the low-molecular compound. This results in the effective improvements in dimensional stability to temperature and mechanical strength of the polyolefin article incorporating the oriented polyolefin material therein.

In the method according to the second invention for manufacture of a polyolefin article, a polymerizable monomer can be utilized for the aforementioned low-molecular compound. In such an instance, the low-molecular compound does not remain inside after the polymerizable monomer is polymerized. Accordingly, the oriented polyolefin material can be firmly joined to an oriented or unoriented polyolefin material to provide a polyolefin article excellent in dimensional stability to temperature and in mechanical strength.

In the second invention, the oriented polyolefin material may be used in a sheet form. In such an instance, the oriented polyolefin sheet can be firmly joined because its surface is dissolved by the low-molecular compound.

In the second invention, the oriented polyolefin material may be comprised of a layered combination of an oriented polyolefin sheet indicating a minus value for the average linear expansion coefficient in the 20 - 80 °C range and an oriented or unoriented polyolefin sheet indicating a plus value for the average linear expansion coefficient in the 20 - 80 °C. In such a case, the low-molecular compound is interposed therebetween before they are bonded to each other by the application of pressure and heat. The opposing sheets are firmly joined to each other because they are caused to dissolve at surfaces by the action of the low-molecular compound. Accordingly, a polyolefin article can be readily obtained which is excellent both in dimensional stability to temperature and in mechanical strength.

In addition, an average coefficient of linear expansion of a resulting polyolefin article in the 20 - 80 °C range can be readily controlled at a value of not exceeding $5 \times 10^{-5}$ (/°C) by adjusting the stacking numbers of the oriented polyolefin sheets having minus values for average coefficient of linear expansion in the 20 - 80 °C range and the oriented or unoriented polyolefin sheets having plus values for average coefficient of linear expansion in the 20 - 80 °C range.

In the method according to the third invention for manufacture of a polyolefin article, the oriented polyolefin material which has a value of not exceeding $5 \times 10^{-5}$ (/°C) for average coefficient of linear expansion in the 20 - 80 °C range is covered with polyolefin having a melting point lower than that of the oriented polyolefin material. The covering polyolefin is softened or melted when pressure and heat are applied to the oriented polyolefin material at a temperature below the melting point thereof. This enables the firm joining of the oriented polyolefin material to an oriented or unoriented polyolefin material. Accordingly, a polyolefin article of the present invention can be readily provided having excellent levels of dimensional stability to temperature and mechanical strength.

Also in the method according to the third invention for manufacture of a polyolefin article, those oriented polyolefin sheets indicating minus values for average coefficient of linear expansion in the 20 - 80 °C range and those oriented or unoriented polyolefin sheets having plus values for average coefficient of linear expansion in the 20 - 80 °C range may be arranged in layers. In such a case, an average coefficient of linear expansion of a resulting polyolefin article in the 20 - 80 °C range can be readily controlled at a value of not exceeding $5 \times 10^{-5}$ (/°C) by adjusting the stacking numbers of the multilayered sheets.

In the method according to the fourth invention for manufacture of a polyolefin article, the oriented polyolefin material which has a value of not exceeding $5 \times 10^{-5}$ (/°C) for average coefficient of linear expansion in the 20 - 80 °C range is subjected to a heat treatment so that its surface layer once melts to undergo relaxation of its molecular orientation. As a result, such an oriented polyolefin material, if pressed while heated to a temperature below the melting point but sufficient to melt the surface layer, can be firmly joined to an oriented or unoriented polyolefin material.

More specifically, the method according to the fourth invention for manufacture of a polyolefin article is required to include the following steps: In a first step, an oriented polyolefin material which has a value of not exceeding $5 \times 10^{-5}$ (/°C) for average coefficient of linear expansion in the 20 - 80 °C range is subjected to a heat treatment to once melt its surface layer. In a second step, pressure and heat are applied to the heat-treated oriented polyolefin material at a temperature which is below a melting point of a middle thickness portion having an oriented crystalline structure but which is higher than a melting point of the surface layer portion once melted by the heat treatment to have a relaxed molecular orientation, so that only the surface layer remelts while the middle thickness portion retains its orientational state, whereby the oriented polyolefin material can be joined.

As a result, a polyolefin article can be readily obtained which has excellent levels of dimensional stability to temperature and mechanical strength.

## DESCRIPTION OF THE PREFERRED EXAMPLES

### Example 1

100 parts by weight of high-density polyethylene (product name: HY 540, manufactured by Mitsubishi Chemical Co., Ltd., MI = 1.0, melting point of 133 °C, weight-average molecular weight of 300,000) and 1 part by weight of benzophenone (photoinitiator) were blended. The blend was melt kneaded at a resin temperature of 200 °C in a 30 mm twin-screw extruder, extruded from a T-die into a sheet form and cooled by a cooling roll to obtain a 1.0 mm thick and 100 mm wide unoriented sheet.

This unoriented sheet was calendered at a calender ratio of 8 by using a 6-inch roll (manufactured by Kodaira Seisakusho Co., Ltd.) maintained at a surface temperature of 100 °C. The calendered sheet was then delivered at a rate of 2 m/min from a roll, passed through a heating oven maintained at 85 °C, taken off at a rate of 8 m/min by a roll to draw the sheet at a draw ratio of 4, and wound around a roll. The sheet obtained was irradiated from both sides with high-pressure mercury lamps for 5 seconds to achieve crosslinking thereof. Finally, the crosslinked sheet while in a tension-free condition was subjected to a relaxation treatment at 130 °C for 1 minute.

The oriented sheet obtained via the above-described procedure measured 50 mm wide and 0.09 mm thick and was transparent. A total orientation ratio was about 30.

A gel fraction of the resulting oriented sheet was about 70 %, when measured according to the hereinafter described procedure. The coefficient of linear expansion (according to the hereinafter described procedure) was - 1.4 $\times 10^{-5}$. A melting point [peak temperature measured in a DSC (differential scanning calorimeter)] of the oriented sheet was 149 °C.

High-density polyethylene (product name: HY 540, manufactured by Mitsubishi Chemical Co., Ltd., MI = 1, melting point of 133 °C, weight-average molecular weight of 300,000) was melt kneaded at a resin temperature of 200 °C in a 30 mm twin-screw extruder, extruded from a T-die into a sheet form and cooled by a cooling roll to obtain a 0.4 mm thick and 50 mm wide unoriented sheet. This unoriented sheet was found to have a coefficient of linear expansion of $10 \times 10^{-5}$.

Each of the aforementioned two types of polyethylene sheets, i.e., the oriented sheet and the unoriented sheet having a linear expansion coefficient of $10 \times 10^{-5}$, was uniformly coated at its one surface with a mixed solution of a peroxide and a polymerizable monomer, as respectively indicated in Table 1, by means of a roll coater. The two types of sheets, 10 for each type, were then alternatingly superposed such that a solution-coated surface of one sheet was brought into contact with a solution-free surface of an adjacent sheet. The amount of the polymerizable monomer (excluding a solvent) coated on each sheet was about 1 part by weight, based on 100 parts by weight of the polyethylene resin.

The resulting stack was pressed at a pressure of 1 kg/cm$^2$ for 7 minutes using a pressing machine controlled at a surface temperature of 120 °C, during which the polymerizable monomer was caused to polymerize, to obtain a polyethylene article. The polyethylene article was then removed from the pressing machine and transferred to a water-cooled press where it was cooled while pressed at a pressure of 1 kg/cm$^2$. As a result, a polyethylene article of Example 1 was obtained.

The sheet-form polyethylene article sample thus obtained measured 65 mm in width and 4.1 mm in thickness. This sample was evaluated for physical properties according to the following evaluation procedures. The results are given in Table 2.

**(Tensile strength, Tensile modulus of elasticity)**

Tensile properties of the sample were evaluated according to a tensile test specified by JIS K 7113. The results are reported in Table 2.

**(Measurement of gel fraction)**

40 mg of the sample was immersed in a 130 °C xylene for 24 hours. A weight of an insoluble residue was measured. A gel fraction was determined by calculating a weight % of the insoluble residue relative to a weight of the sample prior to being dissolved.

**(Average coefficient of linear expansion)**

The polyolefin article sample was gage marked at regular intervals of about 150 mm and left to stand in a constant temperature bath controlled at 20 °C for 1 hour, followed by measurement at 20 °C for distances between the neighboring two gage marks. The sample was then left to stand in the constant temperature bath controlled at 80 °C for 1 hour, followed by the similar measurement of distances between the neighboring two gage marks. The above procedure was repeated three times. The distances between two gage marks at 20 °C and 80 °C, as measured in the second- and third-time procedures, were respectively averaged to calculate the average coefficient of linear expansion from the following equation.

$$\text{Average Coefficient of Linear Expansion} = \frac{(\text{Distance Between Gage Marks at } 80°C) - (\text{Distance Between Gage Marks at } 20°C)}{60 \times \text{Distance Between Gage Marks at } 20°C)} \qquad \text{EQUATION 1}$$

Table 1

| | | Compounded Ingredients | Parts (By Weight) |
|---|---|---|---|
| Example and Comp. Example | | **Styrene Monomer** (Low-Molecular Compound, Manufactured By WAKO JUNYAKU CO., LTD.) | 100 |
| | | **Tert-Butyl Peroxypivalate** (Peroxide, Manufactured By KAYAKU-AKZO CO., LTD.) | 0.25 |
| | | **Divinylbenzene** (Polymerization Promotor, Manufactured By WAKO JUNYAKU CO., LTD.) | 1 |

EXAMPLE 2

The procedure of Example 1 was repeated, except that the thickness of the unoriented sheet was reduced to 0.3 mm, to obtain a sample of polyethylene article which was subsequently evaluated.

EXAMPLE 3

The procedure of Example 1 was repeated, except that the thickness of the unoriented sheet was reduced to 0.2 mm, to obtain a sample of polyethylene article which was subsequently evaluated.

EXAMPLE 4

The procedure of Example 1 was repeated, except that the stack consisted solely of 40 oriented sheets, to obtain a sample of polyethylene article which was subsequently evaluated.

EXAMPLE 5

The procedure of Example 3 was followed, except that each of the two types of polyethylene sheets, i.e., the oriented sheet and the unoriented sheet (0.2 mm thick) having a linear expansion coefficient of $10 \times 10^{-5}$, was uniformly coated at its one surface with nonane (its amount coated on the one surface was 10 parts by weight, based on 100 parts by weight of polyolefin), as the low-molecular compound, instead of the mixed solution of peroxide and polymerizable monomer, by means of a roll coater. As a result, a sample of polyethylene article was obtained and subsequently evaluated.

EXAMPLE 6

The procedure of Example 3 was followed, except that the oriented sheet (melting point of 149 °C) obtained in Example 1 was covered at each side with a 30 µm thick, straight-chain low-density polyethylene film (manufactured by Mitsubishi Chemical Co., Ltd., product name: UF230, melting point of 124 °C) under conditions of 1 kg/cm$^2$ and 130 °C to provide the oriented sheet with covering layers, that the stack was pressed at a temperature of 130 °C, and that the low-molecular compound was not used. As a result, a sample of polyethylene article was obtained and subsequently evaluated.

EXAMPLE 7

The aforementioned oriented sheet (melting point of 150 °C) was passed twice, i.e., in a sequence of obverse and reverse, between a heating roll controlled at a surface temperature of 180 °C and a cooling roll controlled at a surface temperature of 30 °C, at a line pressure of 2 kg/cm at a speed of 2 m/min, to achieve a heat treatment by which only the surface layers of the oriented sheet were caused to melt. The procedure of Example 4 was followed, except that such an oriented sheet having surface layers once melted was used, that the polymerizable monomer solution was not used, and that the stack was pressed at a temperature of 138 °C. As a result, a sample of polyethylene article was obtained and subsequently evaluated.

EXAMPLE 8

The procedure of Example 5 was followed, except that the oriented sheet having surfaces once melted by the heat treatment of Example 7 was used, to obtain a sample of polyethylene article which was subsequently evaluated.

EXAMPLE 9

The procedure of Example 6 was followed, except that the oriented sheet having surfaces once melted by the heat treatment of Example 7 was used and that this oriented sheet was covered with polyethylene, to obtain a sample of polyethylene article which was subsequently evaluated.

EXAMPLE 10

The procedure of Example 4 was followed, except that the oriented sheet was cut into 1 mm wide strip-like or fibrous-like size and that 40 of those strip-like oriented sheets were arranged in layers to form the stack, to obtain a sample of polyethylene article which was subsequently evaluated.

COMPARATIVE EXAMPLE 1

The procedure of Example 1 was repeated, except that the stack consisted solely of 15 unoriented sheets, to obtain a sample of polyethylene article which was subsequently evaluated.

COMPARATIVE EXAMPLE 2

In the attempt to obtain a sample of polyethylene article in the same manner as in Example 1, the procedure of Example 1 was followed, except that the stack consisted solely of 20 oriented sheets without intervention of the mixed solution of peroxide and polymerizable monomer. However, this attempt failed because of insufficient bonding between the sheets.

COMPARATIVE EXAMPLE 3

The procedure of Example 1 was repeated, except that the stack consisted solely of 20 oriented sheets (melting point of 150 °C) and was pressed at a temperature of 170 °C, to obtain a sample of polyethylene article which was subsequently evaluated.

COMPARATIVE EXAMPLE 4

The procedure of Example 6 was repeated, except that the stack was pressed at a temperature of 170 °C, to obtain a sample of polyethylene article which was subsequently evaluated.

COMPARATIVE EXAMPLE 5

The procedure of Example 7 was repeated, except that the stack was pressed at a temperature of 170 °C, to obtain a sample of polyethylene article which was subsequently evaluated.

Table 2

| | | T1 (mm) | LMC | PC | HT | TEMP. (°C) | TS (kg/cm$^2$) | TME (kg/cm$^2$) | LEC (/°C) | T2 (mm) |
|---|---|---|---|---|---|---|---|---|---|---|
| Ex. | 1 | 0.4 | P | A | A | 120 | 2200 | 51000 | $4.1 \times 10^{-5}$ | 4.1 |
| | 2 | 0.3 | P | A | A | 120 | 3100 | 68000 | $2.5 \times 10^{-5}$ | 3.3 |
| | 3 | 0.2 | P | A | A | 120 | 4050 | 144000 | $0.5 \times 10^{-5}$ | 2.5 |
| | 4 | A | P | A | A | 120 | 8050 | 249000 | $-0.4 \times 10^{-5}$ | 3.4 |
| | 5 | 0.2 | P | A | A | 120 | 4100 | 151000 | $0.2 \times 10^{-5}$ | 2.6 |
| | 6 | 0.2 | A | P | A | 130 | 3700 | 112000 | $0.9 \times 10^{-5}$ | 2.7 |
| | 7 | A | A | A | P | 138 | 7800 | 258000 | $-1.5 \times 10^{-5}$ | 3.1 |
| | 8 | 0.2 | P | A | P | 120 | 3870 | 142000 | $0.9 \times 10^{-5}$ | 2.5 |
| | 9 | 0.2 | A | P | P | 130 | 3400 | 100400 | $1.0 \times 10^{-5}$ | 2.8 |
| | 10 | A | P | A | A | 120 | 7450 | 210500 | $-0.8 \times 10^{-5}$ | 3.3 |

Table 2 (continued)

| | | T1 (mm) | LMC | PC | HT | TEMP. (°C) | TS (kg/cm$^2$) | TME (kg/cm$^2$) | LEC (/°C) | T2 (mm) |
|---|---|---|---|---|---|---|---|---|---|---|
| Comp. Ex. | 1 | 0.4 | P | A | A | 120 | 340 | 12000 | 10.9x10$^{-5}$ | 4.2 |
| | 2 | FAILED | | | | | | | | - |
| | 3 | A | P | A | A | 170 | 410 | 19000 | 9.8x10$^{-5}$ | 3.5 |
| | 4 | 0.2 | A | P | A | 170 | 280 | 9800 | 12.1x10$^{-5}$ | 2.9 |
| | 5 | A | A | A | P | 170 | 400 | 18500 | 10.1x10$^{-5}$ | 3.1 |

T1: Thickness of an Unoriented Sheet
T2: Thickness of an Article
LMC: Low-Molecular Compound
PC: Polyolefin Covering
HT: Heat Treatment
TEMP.: Joining Temperature
TS: Tensile Strength
TME: Tensile Modulus of Elasticity
LEC: Linear Expansion Coefficient
FAILED: Failed Because of Insufficient Adhesion at Interfaces Between the Sheets
A: Absent
P: Present

As can be seen from Table 2, the polyethylene article sample of Comparative Example 1 exhibited low levels of tensile strength and tensile modulus. This is considered due to the absence of oriented polyethylene sheet layers, which conceivably led to the sample value of 10.9 x 10$^{-5}$ for average coefficient of linear expansion in the 20 °C - 80 °C range which value is greater than 5 x 10$^{-5}$ (/°C).

Also, Comparative Example 2 failed to provide adhesion at interfaces between the oriented sheets. This is considered due to the absence of the polymerizable monomer or nonane.

The polyethylene article sample of Comparative Example 3 consisted solely of the sheets oriented at ratios of about 30 and indicated an increased value of 9.8 x 10$^{-5}$ (/°C) for average coefficient of linear expansion, and consequently exhibited low levels of tensile strength and tensile modulus.

In Comparative Examples 4 and 5, the resulting polyethylene article samples indicated increased values of 12.1 x 10$^{-5}$ and 10.1 x 10$^{-5}$ (/°C), respectively, for average coefficient of linear expansion, and both exhibited low levels of tensile strength and tensile modulus. This is considered to have resulted from the increased press temperature of 170 °C which is higher than a melting point of the oriented sheets.

The polyethylene article samples obtained in Examples 1 - 10 all included the oriented polyethylene sheet layers and indicated values of not exceeding 4.1 x 10$^{-5}$ (/°C) for average coefficient of linear expansion in the 20 - 80 °C range, and consequently exhibited high levels of tensile strength and tensile modulus.

The polyethylene article samples obtained in Examples 4, 7 and 10 indicated minus values for average coefficient of linear expansion. This is due to the sole use of the oriented polyethylene sheets.

EFFECTS OF THE INVENTION

The polyolefin article according to the present invention has an improved level of dimensional stability to temperature as well as an enhanced level of mechanical strength, because it is configured to include at least an oriented polyolefin material so that its average coefficient of linear expansion is maintained at a value of not exceeding 5 x 10$^{-5}$ (/°C) in the 20 °C - 80 °C range. Hence, high-rigidity polyolefin articles can be presented. Also, a need to incorporate a dissimilar reinforcing material, such as glass fibers, is eliminated to result in the successful reduction in weight of such high-rigidity polyolefin articles.

In the prior art disclosed in Japanese Patent Publication No. Hei 7-84034, the use of a silane-crosslinked structure of ultra-high molecular weight polyethylene necessitates the use of a large amount of plasticizers. In contrast, there is no need for the polyolefin article of the present invention to use such a silane-crosslinked structure of ultra-high molecular weight polyethylene and accordingly a large amount of plasticizers. This simplifies a manufacturing process and enables a mass production of high-rigidity and lightweight polyolefin articles on an industrial scale.

In the method according to the second invention, for manufacture of a polyolefin article, the oriented polyolefin material having a value of not exceeding $5 \times 10^{-5}$ (/°C) for average coefficient of linear expansion in the 20 - 80 °C range is bonded by the application of pressure and heat, after the low-molecular compound capable of dissolving the polyolefin is deposited on its surface. The dissolution of the oriented polyolefin material surface by the action of the low-molecular compound results in the relaxed molecular orientation in the surface layer of the oriented polyolefin material. This enables the oriented polyolefin material to be firmly bonded upon application of pressure and heat, leading to the successful provision of the polyolefin article of the present invention which has excellent levels of dimensional stability to temperature and mechanical strength.

An oriented polyolefin sheet may preferably utilized for the aforementioned oriented polyolefin material. Such an oriented polyolefin sheet can be readily produced using conventional sheet forming and orienting processes. Also, the average coefficient of linear expansion can be readily controlled by adjusting the orientation ratio.

In the method according to the third invention for manufacture of a polyolefin article, the oriented polyolefin material which has a value of not exceeding $5 \times 10^{-5}$ (/°C) for average coefficient of linear expansion in the 20 - 80 °C range is covered with polyolefin having a melting point lower than that of the oriented polyolefin material, and is subsequently bonded by the application of pressure and heat at a temperature below the melting point of the oriented polyolefin material. Accordingly, when the polyolefin-covered oriented polyolefin material is bonded to the other oriented polyolefin material, either uncovered or covered with polyolefin, the bonding strength therebetween can be increased to a sufficient level due to the melting of the covering polyolefin. Also, the polyolefin article thus obtained includes the oriented polyolefin material having a value of not exceeding $5 \times 10^{-5}$ (/°C) for average coefficient of linear expansion in the 20 - 80 °C range. Therefore, polyolefin articles can be provided which have excellent levels of dimensional stability to temperature and mechanical strength, as similar to the invention recited in claim 1.

In the method according to the fourth invention for manufacture of a polyolefin article, the oriented polyolefin material which has a value of not exceeding $5 \times 10^{-5}$ (/°C) for average coefficient of linear expansion in the 20 - 80 °C range is subjected to a heat treatment to once melt its surface layer, and is subsequently bonded by the application of pressure and heat at a temperature below the melting point of the oriented polyolefin material but sufficient to remelt the surface layer. The heat treatment causes the surface layer to undergo relaxation of its molecular orientation. Accordingly, when such an oriented polyolefin material is bonded to the oriented or unoriented polyolefin material by the application of pressure and heat at a temperature below the melting point but sufficient to remelt the surface, the bonding strength therebetween can be effectively increased to result in the provision of the polyolefin article of the present invention which has excellent levels of dimensional stability to temperature and mechanical strength.

In the methods according to the second and third inventions for manufacture of a polyolefin article, the oriented polyolefin material may be comprised of a layered combination of the oriented polyolefin sheets indicating minus values for average coefficient of linear expansion in the 20 - 80 °C range and the oriented or unoriented polyolefin sheets having plus values for average coefficient of linear expansion in the 20 - 80 °C. The oriented polyolefin sheets having minus values and the oriented or unoriented polyolefin sheets having plus values for average coefficient of linear expansion in the 20 - 80 °C range, can be readily produced using conventional sheet forming and orienting techniques. Accordingly, a suitable control of such a combination results in readily obtaining a polyolefin article having an overall value of not exceeding $5 \times 10^{-5}$ (/°C) for average coefficient of linear expansion.

## Claims

1. A polyolefin article characterized as being composed of polyolefin and as including an oriented polyolefin material so that its average coefficient of linear expansion is maintained at a value of not exceeding $5 \times 10^{-5}$ (/°C) in the 20 - 80 °C range.

2. The polyolefin article as recited in claim 1, characterized in that said oriented polyolefin material is formed of high-density polyethylene.

3. The polyolefin article as recited in claim 2, characterized in that said high-density polyethylene has a weight-average molecular weight within the range of 100,000 - 500,000.

4. The polyolefin article as recited in any one of claims 1 - 3, characterized in that said oriented polyolefin material is provided in a sheet form.

5. A method for manufacture of a polyolefin article characterized as including the steps of:

   depositing, on a surface of an oriented polyolefin material having a value of not exceeding $5 \times 10^{-5}$ (/°C) for average coefficient of linear expansion in the 20 - 80 °C range, a low-molecular compound capable of dissolving the polyolefin; and

subsequent to the deposition of said low-molecular compound, effecting bonding of said oriented polyolefin material by the application of pressure and heat.

6. The method for manufacture of a polyolefin article as recited in claim 5, wherein said low-molecular compound is a polymerizable monomer.

7. The method for manufacture of a polyolefin article as recited in claim 5 or 6, wherein said oriented polyolefin material is provided in a sheet form and wherein the oriented polyolefin sheet is bonded to an oriented or unoriented polyolefin sheet by the application of pressure and heat.

8. The method for manufacture of a polyolefin article as recited in any one of claims 5 - 7, characterized in that said oriented polyolefin material is an oriented polyolefin sheet having a minus value for average coefficient of linear expansion in the 20 - 80 °C range, and that said oriented polyolefin sheet is superposed on an oriented or unoriented polyolefin sheet having a plus value for average coefficient of linear expansion in the 20 - 80 °C range for subsequent bonding thereof by the application of pressure and heat.

9. A method for manufacture of a polyolefin article characterized as including the steps of:

covering an oriented polyolefin material having a value of not exceeding $5 \times 10^{-5}$ (/°C) for average coefficient of linear expansion in the 20 - 80 °C range with a layer of polyolefin having a melting point lower than that of said oriented polyolefin material;
subsequent to the covering with the polyolefin layer, effecting joining of the oriented polyolefin material by the application of pressure and heat at a temperature below the melting point of the oriented polyolefin material but sufficient to soften or melt said covering polyolefin.

10. The method for manufacture of a polyolefin article as recited in claim 9, characterized in that said oriented polyolefin material comprises a plurality of oriented polyolefin sheets having minus values for average coefficient of linear expansion in the 20 - 80 °C range, and that an oriented or unoriented polyolefin sheet having a plus value for average coefficient of linear expansion in the 20 - 80 °C range is interposed between adjacent ones of said oriented polyolefin sheets covered with said polyolefin layer for subsequent joining by the application of pressure and heat.

11. The method for manufacture of a polyolefin article as recited in any one of claims 5 - 10, characterized in that said oriented polyolefin material is prepared by subjecting an oriented polyolefin material having a value of not exceeding $5 \times 10^{-5}$ (/°C) for average coefficient of linear expansion in the 20 - 80 °C range to a heat treatment so that its surface once melts.

12. The method for manufacture of a polyolefin article as recited in any one of claims 5 - 10, characterized as including the steps of:

subjecting an oriented polyolefin material having a value of not exceeding $5 \times 10^{-5}$ (/°C) for average coefficient of linear expansion in the 20 - 80 °C range to a heat treatment so that its surface melts; and
effecting joining of said oriented polyolefin material by the application of pressure and heat at a temperature below a melting point of the heat-treated oriented polyolefin material but sufficient to melt said surface.

EP 0 963 838 A1

## INTERNATIONAL SEARCH REPORT

International application No.

PCT/JP98/00713

**A. CLASSIFICATION OF SUBJECT MATTER**
Int.Cl⁶ B32B27/32, C08J5/12, B29C65/02, B29C65/48

According to International Patent Classification (IPC) or to both national classification and IPC

**B. FIELDS SEARCHED**

Minimum documentation searched (classification system followed by classification symbols)
Int.Cl⁶ B32B27/32, C08J5/12, B29C65/02, B29C65/48

Documentation searched other than minimum documentation to the extent that such documents are included in the fields searched
Jitsuyo Shinan Koho          1926–1996    Jitsuyo Shinan Toroku Koho    1996–1998
Kokai Jitsuyo Shinan Koho    1971–1998    Toroku Jitsuyo Shinan Koho    1994–1998

Electronic data base consulted during the international search (name of data base and, where practicable, search terms used)
WPI/L

**C. DOCUMENTS CONSIDERED TO BE RELEVANT**

| Category* | Citation of document, with indication, where appropriate, of the relevant passages | Relevant to claim No. |
|---|---|---|
| X | JP, 53-41375, A (Koninklijke Emballage Industrie Van Leer B.V.), | 1-4 |
| Y | April 14, 1978 (14. 04. 78) & US, 4355076, A & CA, 1109378, A & DE, 2735256, A & FR, 2360403, A | 5-8 |
| X | JP, 3-138135, A (Hoechst AG.), June 12, 1991 (12. 06. 91) & EP, 418773, A & DE, 3931451, A | 1-4, 9-12 |
| X | JP, 54-106583, A (Nippon Oil Co., Ltd.), August 21, 1979 (21. 08. 79) (Family: none) | 1-4, 9-12 |
| X | JP, 57-59721, A (Nitto Electric Industrial Co., Ltd.), April 10, 1982 (10. 04. 82) (Family: none) | 1-4 |
| X | JP, 60-34834, A (Sekisui Seikei Kogyo K.K.), February 22, 1985 (22. 02. 85) (Family: none) | 1-4 |

| ☒ Further documents are listed in the continuation of Box C. | ☐ See patent family annex. |
|---|---|

\* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| May 18, 1998 (18. 05. 98) | May 26, 1998 (26. 05. 98) |

| Name and mailing address of the ISA/ Japanese Patent Office | Authorized officer |
|---|---|
| Facsimile No. | Telephone No. |

Form PCT/ISA/210 (second sheet) (July 1992)

17

## INTERNATIONAL SEARCH REPORT

| International application No. |
| --- |
| PCT/JP98/00713 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | JP, 49-53264, A  (Dainippon Printing Co., Ltd.), May 23, 1974 (23. 05. 74)  (Family: none) | 1-4 |
| Y | JP, 49-107069, A  (Matsushita Electric Works, Ltd.), October 11, 1974 (11. 10. 74)  (Family: none) | 5-8 |

Form PCT/ISA/210 (continuation of second sheet) (July 1992)